# EUROPEAN PATENT APPLICATION

(11) **EP 0 661 491 A1**
(43) Date of publication of application: **05.07.1995**
(21) Application number: 94120719.3
(22) Date of filing: 27.12.1994
(51) Int. Cl.: F16L 47/00, F16L 33/22

(54) **Coupling for joining two pipes**

(30) Priority: 28.12.1993 IT TO930283 U
(71) Applicant: DAYCO EUROPE S.p.A., I-10123 Torino (IT)
(72) Inventor: Fiorio, Luigino, I-10015 Ivrea (IT)
(74) Representative: Jorio, Paolo

(57) **Abstract**

A coupling (1) for joining two pipes (2) (3), whereof one (2) is rigid and the other (3) is flexible, comprises a coupling body (4), which is connected to rigid pipe (2), and whereon there is fitted end section (8) of pipe (3); coupling (1) being further provided with a flexible tubular body (10), fitted over end section (8) and section (9) of flexible pipe (3) adjacent to end section (8).

## Description

The present invention relates to a coupling for joining two pipes.

In particular, the present invention relates to a coupling for joining two pipes, whereof one is substantially rigid and the other one is flexible, capable of being used on a vehicle to obtain a fuel pipe.

Different types of couplings, employed to connect a substantially rigid pipe to a corresponding flexible one, are well known and comprise a rigid coupling body rigidly connected with the rigid pipe and provided with one or more outer ribs, extending circumferentially, an end section of the flexible pipe being fitted on to the rigid body. In this way, the circumferentially extending ribs both prevent the flexible pipe from slipping off the rigid body and help increase tightness between the coupled parts.

Such joints, however, have a main drawback, much as their use is widespread, in that they do not allow for easy deflection and handling of the coupled pipes, for example, during assembly thereof on to the relevant vehicle. Indeed, a mere deflection of the flexible pipe inevitably causes it to be deformed in the neighbourhood of the coupling body's free end, thus resulting in the passage defined by said pipes being throttled. Such a drawback, therefore, causes both a localized alteration in the physical characteristics of the flexible pipe, which may occur during assembly, further to the successive deflections of said flexible pipe, and difficulties in feeding the relevant fluid, sometimes owing to said throttle becoming permanent after pipe assembly.

Aim of the present invention is to furnish a coupling for connecting pipes, such as to easily and economically overcome the aforementioned disadvantages.

This object is attained by the present invention, which relates to a coupling for joining two pipes, whereof at least one comprises a flexible end portion; said coupling comprising a tubular coupling body, which is connected with the second of the two pipes, and whereon an end section of said flexible end portion is fitted, characterized in that it further comprises an elastic tubular body surrounding said flexible end portion.

Preferably, said elastic tubular body is defined by a flexible pipe whose inner diameter is substantially equal to an outer diameter of said flexible end portion.

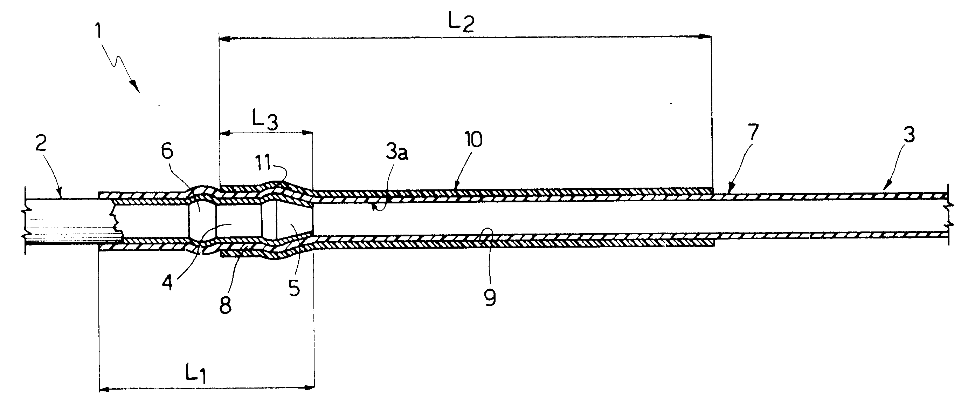

The present invention will be better described by way of a non-limiting example, with reference to the accompanying drawing in which there is shown a cross-section thereof.

With reference to the accompanying drawing, there is indicated with 1 a coupling for connecting two pipes, indicated with 2 and 3, respectively, whereof pipe 2 is rigid and pipe 3 is a flexible pipe, made of plastic material and capable of defining, along with pipe 2, a passage 3a for fuel, for example petrol, to be fed through it.

Couppling 1 comprises a rigid tubular coupling body 4 which, in the example in point, is integral with pipe 2 and represents an end section thereof. Tubular body 4 comprises an inlet portion 5, tapered towards the free end of body 4, and a projection 6, extending circumferentially and in a spaced relationship, with respect to portion 5. Pipe 3 comprises a flexible end portion 7 comprising, in turn, sections 8 and 9, adjacent to each other, whereof section 8 is an end section, fitted on to tubular body 4 and having a length L1. Over section 9 and over at least a part of section 8 there is fitted a further flexible pipe 10, partially making up coupling 1 and having an inner diameter which is subtantially equal to the outer diameter of portion 7, and a length L2 which is bigger than length L1 of end section 8, and such as to cause the ratio between end portion 7 outer diameter and length L2 to be preferably lower than one sixth. In particular, pipe 10 comprises an end section 11, which is fitted on to end section 8, and whose length L3 is smaller than length L1 of said section 8 by more than half.

During assembly of pipes 2 and 3 on the relevant vehicle (not shown in the drawing), pipe 10 allows, since section 9 of portion 7 is stiffened, pipe 3 to be deflected, with respect to pipe 2, around a transversal axis, with respect to said pipes 2 and 3, without affecting the functionality of passage 3a, defined by pipes 2 and 3, once connected. In particular, pipe 10 allows for distribution of stresses, acting on section 9, thus preventing localized strains, plastic deformations as well, of section 9 in the neighbourhood of portion 5 of body 4 and, consequently, said passage 3a from being throttled.

According to the foregoing, the hereinabove described embodiment of coupling 1 may of course be altered, improved and added onto, so as not to exceed the scope of protection of the present invention. In particular, body 4 may have a different shape, also not integral with pipe 2, and such, as to allow for it to be joined to an ordinary pipe slug, also not a rigid one.

## Claims

1. A coupling (1) for joining two pipes (2), (3), whereof at least one (3) comprises a flexible end portion; coupling (1) comprising a tubular coupling body (4), connected with pipe (2) of said pipes (2) (3), and whereon there is fitted an end section (8) of said flexible end portion (7), characterized in that it further comprises an elastic tubular body (10) surrounding said flexible end portion (7).

2. A coupling as claimed in Claim 1, characterized in that said elastic tubular body is defined by a flexible pipe (10), whose inner diameter is substantially equal to the outer diameter of said flexible end portion (7).

3. A coupling as claimed in Claim 2, characterized in that length (L2) of said flexible pipe (10) is bigger than length (L1) of end section (8) of said flexible end portion (7).

4. A coupling as claimed in either Claim 2 or 3, characterized in that the ratio between the outer diameter of said flexible end portion (7) and a length (L2) of flexible pipe (10) is lower than one sixth.

5. A coupling as claimed in any one of Claims 2 to 4, characterized in that an end section (11) of said flexible pipe (10) is fitted on to end section (8) of said flexible end portion (7); length (L3) of end section (11) of said flexible pipe (10) being smaller than a length (L1) of end section (8) of said flexible end portion (7) by more than half.

6. A coupling as claimed in any one of the above Claims, characterized in that said second pipe (2) is rigid, and that said coupling body (4) is integral with said pipe (2); said first pipe (3) being wholly flexible and said flexible end portion (7) being the end portion of said first pipe (3).
